# EUROPEAN PATENT APPLICATION

(11) **EP 1 519 493 A1**
(43) Date of publication of application: **30.03.2005**
(21) Application number: 03730881.4
(22) Date of filing: 24.06.2003
(51) Int. Cl.: H04B 1/16, H04H 5/00

(54) **RECEIVER**

(30) Priority: 28.06.2002 JP 2002190394
(71) Applicant: KABUSHIKI KAISHA TOYOTA JIDOSHOKKI, Kariya-shi, Aichi 448-8671 (JP); Niigata Seimitsu Co., Ltd., Niigata 943-0834 (JP)
(72) Inventor: KOIKE, Tsuyoshi, c/o K. K. TOYOTA JIDOSHOKKI, Kariya-shi, Aichi 448-8671 (JP); MIYAGI, Hiroshi, c/o NIIGATA SEIMITSU CO., LTD., Joetsu-shi, Niigata 943-0834 (JP)
(74) Representative: Leson, Thomas Johannes Alois, Dipl.-Ing.
(86) International application number: PCT/JP2003/008004
(87) International publication number: WO 2004/004145

(57) **Abstract**

The time constant of an HCC de-emphasis circuit 15, which is connected in the stage following a stereo demodulator circuit 14 for demodulating a received signal and which has both a high-cut control function and a de-emphasis function, is made variable based on the reception level.

## Description

### Technical Field

The present invention relates to a receiver having a de-emphasis circuit which returns the frequency component of a signal which is emphasized on the transmission side to its original state on the reception side after it is demodulated.

### Background Art

A receiver equipped with a HCC (high cut control) circuit which attenuates the high frequency component of a received signal and improves its audio characteristics when the reception level of the received signal is low in addition to a de-emphasis circuit is well established receiver technology, particularly FM (frequency modulation) receivers.

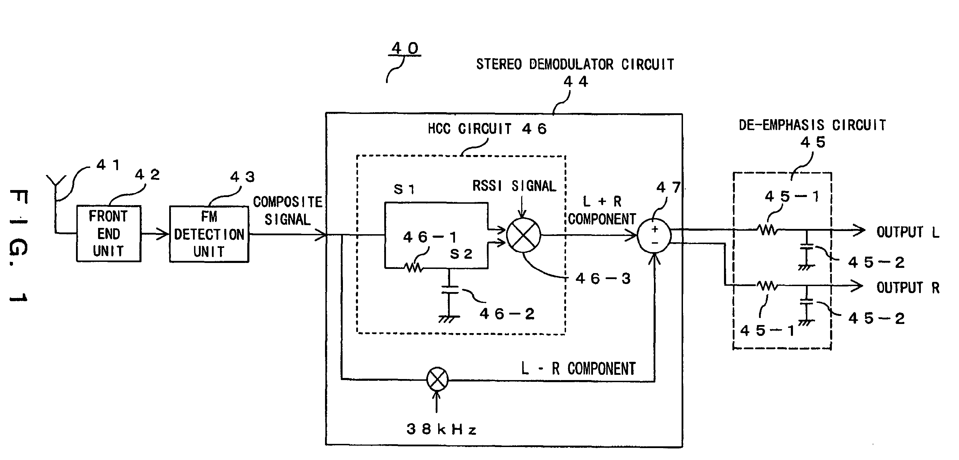

Fig. 1 shows a conventional receiver 40.

The receiver 40 comprises an antenna 41, front end unit 42, FM detection unit 43, stereo demodulator circuit 44, and de-emphasis circuit 45. The front end unit 42 not only performs the process of tuning a received signal, but also performs the process of converting the frequency from a carrier frequency band to a medium frequency.

The FM detection unit 43 generates a composite signal comprising an L (left) + R (right) component signal and an L - R component signal from the received signal which is processed by the front end unit 42. The stereo demodulator circuit 44 comprises a HCC circuit 46 which attenuates the high frequency component ( a high frequency component or a side lobe) of the L + R component signal and an operation circuit 47 which generates two signals of an L component signal and an R component signal from the L + R component signal and the L - R component signal. The L - R component signal is mixed with a signal having a frequency of 38 kHz in the stereo demodulation circuit 44. The L + R component signal is inputted to the HCC circuit 46. In the HCC circuit 46, the L + R component signal branches along two paths, i.e. the path (path S1) which passes as it is and the path (path S2) which attenuates the high frequency component by a lowpass filter (integrating circuit) comprising a resistor 46-1 and a capacitor 46-2. The L + R component signal which is inputted to the HCC circuit 46 is controlled so that when its reception level is high enough, most of the L + R signal passing through the path S1 is output, and when its reception level is low, the ratio of the L + R signal passing through the path S2 is output increases according to its reception level. In this way, the high frequency component of the L + R component signal which becomes the cause of noise increases as reception level decreases. The HCC circuit 44 increases the L + R component signal passing through the path S2 according to the reception level, and attenuates the high frequency component of the L + R component signal. In other words, the HCC circuit 44 reduces the cut-off frequency of a lowpass filter in accordance with the decrease of the reception level. The control of attenuating the high frequency component in accordance with the reception level is implemented based on an RSSI (received signal strength indicator) signal which is inputted to a mixer circuit 46-3. The RSSI signal is a signal indicating the reception level.

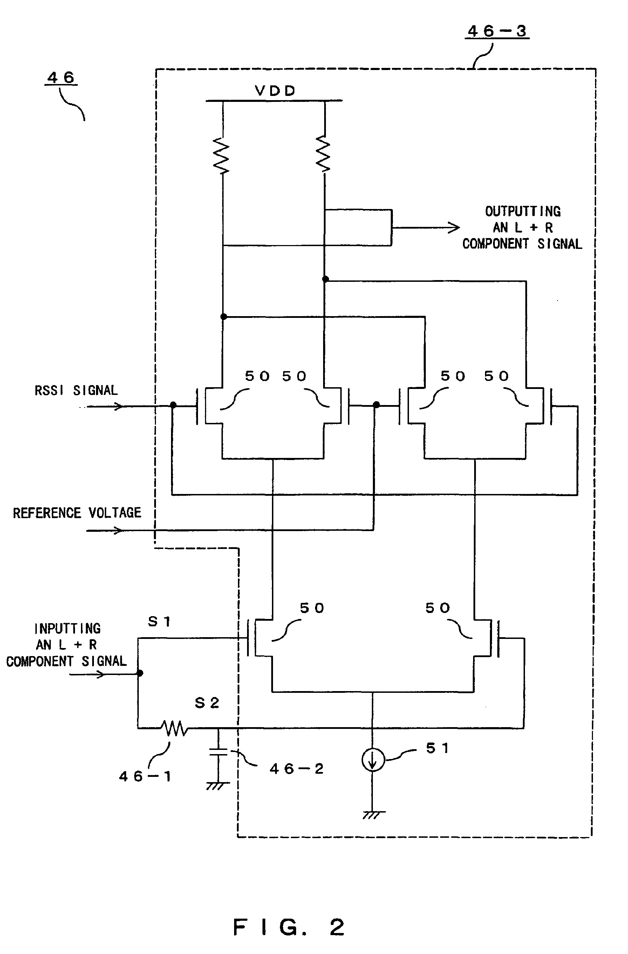

Fig. 2 shows the circuit configuration of the HCC circuit 46.

For example, the mixer circuit 46-3 is a differential amplifier comprising six transistors 50 and a constant-current circuit 51, and controls the ratio of the L + R component signal which flows to the path S2 based on the difference between the RSSI signal and a reference voltage, as shown in Fig. 2.

The L + R component signal output from the mixer circuit 46-3 and the L - R component signal mixed with a 38 kHz signal are separated into an L component signal and an R component signal in the operation circuit 47, as shown in Fig. 1, and are output to the de-emphasis circuit 45. The high frequency component is attenuated by the lowpass filter comprising a resistor 45-1 and a capacitor 45-2 (mounted externally).

However, since the cut-off frequency of the lowpass filter comprising a resistor 46-1 and a capacitor 46-2 of the HCC circuit 46 in a conventional receiver 40 is variable with a low frequency of about 1 kHz, the capacitance of the capacitor 46-2 must be large, and to include the capacitor 46-2 inside an IC chip is difficult.

In conventional receiving equipment, since the capacitor 46-2 of the HCC circuit 46 is externally mounted, not only an IC chip but a capacitor must be mounted on a printed circuit board, and the area of the printed circuit board increases, thus increasing the size of the receiver.

There is another problem in that the externally-mounted capacitor gives rise to extra expense and thus the production cost increases in accordance.

Then, the present invention has been developed to provide a receiver which constrains the size of and therefore the area in which a printed circuit board is mounted and reduces its cost.

### Disclosure of Invention

In order to solve the above problems, the present invention is configured as follows.

The receiver of the present invention is characterized in that the time constant of a high frequency attenuation circuit which is connected in the stage following a demodulator circuit for demodulating a received signal and which has both a high-cut control function and a de-emphasis function is made variable based on the reception level.

Since the parts required in the high-cut control function and the parts required in the de-emphasis function can be shared, the externally mounted capacitor which was required for the HCC circuit of a conventional receiver can be omitted, the increase of the area of an IC chip avoided and the cost reduced.

Also, the receiver of the present invention is characterized in that the receiver comprises a demodulation unit for demodulating a received signal, an attenuation unit which is connected in the stage following the demodulation unit and which attenuates the high frequency component of the received signal, a variable unit for making the cut-off frequency of the attenuation unit variable, and a generation unit for generating a control signal for controlling the operation of the variable unit based on the reception level of the received signal.

When the receiver receives an FM reception signal, the generation unit may be made to generate a control signal for controlling the operation of the variable unit based on the reception level of the FM reception signal.

Also, the generation unit of the receiver may be made to generate a control signal so that a cut-off frequency of the attenuation unit becomes smaller as the reception level of the received signal becomes lower.

Since the parts for attenuating the high frequency component of the received signal according to the reception level and the parts for attenuating the reception level of the received signal into a predetermined reception level canbe shared, for example, the externally mounted capacitor which was required for the HCC circuit of a conventional receiver can be omitted, the increase of the area of an IC chip avoided and the cost reduced.

Also, the receiver of the present invention is characterized in that the receiver comprises a demodulation unit for demodulating an FM reception signal, a resistor element comprising two or more resistors connected in the stage following the demodulation unit, a changeover unit for changing over the resistance value of the resistor element, a capacitor which attenuates the high frequency component of the demodulated FM signal in combination with the resistor element, and a generation unit for generating a control signal for controlling the changeover operation of the changeover unit based on the reception level of the FM signal.

Also, the generation unit of the receiver may be made to generate a control signal so that the resistance value of the resistor element becomes larger as the reception level of the received signal becomes lower.

Thus, since the capacitor which attenuates the high frequency component of the FM reception signal according to the reception level of the FM reception signal and the capacitor which attenuates the reception level of the FM reception signal into a predetermined reception level can be shared, for example, the externally mounted capacitor which was required for the HCC circuit of a conventional receiver can be omitted, the increase of the area of an IC chip avoided and the cost reduced.

Also, the receiver of the present invention is characterized in that the receiver which receives an FM signal or an AM signal comprises a demodulation unit for demodulating the FM signal or theAM signal, a resistor element consisting of two or more resistors connected in the stage following the demodulation unit, a changeover unit for changing over the resistance value of the resistor, a capacitor which attenuates the high frequency component of the demodulated FM signal or AM signal in combination with the resistor element, and a first generation unit for generating a control signal for controlling the changeover operation of the changeover unit based on the reception level of the FM signal, a second generation unit for generating a control signal for AM for controlling the changeover operation of the changeover unit based on AM signal, and a selection unit for selecting either the control signal or the control signal for AM and outputting the selected signal to the changeover unit.

Also, the first generation unit of the receiver may be made to generate a control signal so that the resistance value of the resistor becomes larger as the reception level of the FM signal becomes lower.

Also, the receiver further comprises a third generation unit for generating a control signal for FM for controlling the changeover operation of the changeover unit in order to change the time constant of the de-emphasis function, and the selection unit may be made to select either the control signal, the control signal for AM or the control signal for FM based on received signal and output the selected signal to the changeover unit.

Thus, since the capacitor which attenuates the high frequency component of the FM reception signal according to the reception level of the FM reception signal, the capacitor which attenuates the reception level of the FM reception signal into a predetermined reception level, and the capacitor of a lowpass filter of the AM reception signal can be shared, for example, the externally mounted capacitor which was required for the HCC circuit and the lowpass filter in a conventional AM and FM receiver can be omitted, the increase of the area of an IC chip avoided and the cost reduced.

### Brief Description of the Drawings

The present invention will be more apparent from the following detailed description when the accompanying drawings are referenced.

Fig. 1 shows a conventional receiver.

Fig. 2 shows the circuit configuration of the HCC circuit.

Fig. 3 shows the receiver in the embodiment of the present invention.

Fig. 4 shows the changeover operation of the switch of the HCC de-emphasis circuit.

Fig. 5A shows the switch drive circuit 23 constituted by a NOT circuit and an AND circuit.

Fig. 5B shows a specific example of the circuit configuration of the switch.

Fig. 6 shows the receiver in another embodiment.

Fig. 7 shows the receiver in another embodiment.

### Best Mode for Carrying Out the Invention

Described below are the embodiments of the present invention with reference to the drawings.

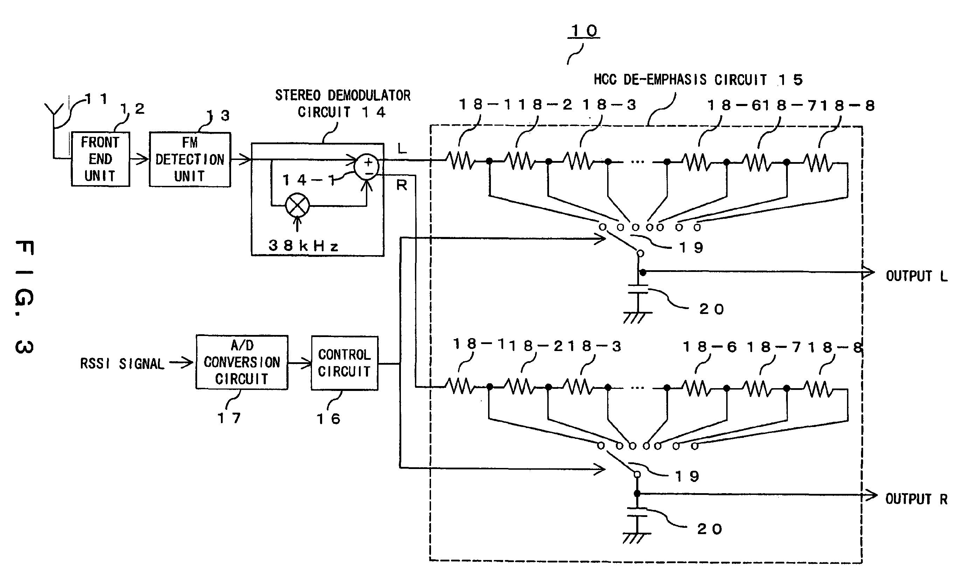

Fig. 3 shows the receiver in the embodiment of the present invention.

The receiver 10 comprises an antenna 11, front end unit 12, FM detection unit 13, stereo demodulation unit 14 (demodulation unit), HCC de-emphasis circuit 15 (high-frequency attenuation circuit) having both a high-cut control function and a de-emphasis function, control circuit 16 (generation unit), and A/D converter 17. The front end unit 12 performs not only the process of tuning a received signal, but also performs various processes of, for example, converting the frequency of a received signal from a carrier frequency band to a medium frequency.

The FM detection unit 13 generates a composite signal consisting of an L + R component signal and an L - R component signal from the received signal which is processed by the front end unit 12. The stereo demodulation circuit 14 comprises an operation circuit 14-1 which generates two signals, an L component signal and an R component signal, from the L + R component signal and the L - R component signal. The L signal and the R signal are inputted to the HCC de-emphasis circuit 15.

The HCC de-emphasis circuit 15 comprises eight resistors 18 (18-1, 18-2, ···, 18-8), a switch 19 (changeover unit or variable unit) which changes over the resistance value of the resistor 18 (resistor element) according to the reception level of a received signal and makes the cut-off frequency of the HCC de-emphasis circuit 15 variable, and a capacitor 20. The high-frequency component of the received signal is attenuated by the configuration (attenuation unit) consisting of the resistor 18 and capacitor 20. In the resistor 18 and the capacitor 20, the same label is given to the L signal unit and the R signal unit, but the resistance value and the capacitance value can be arbitrarily set.

The characteristic of the receiver 10 in the embodiment of the present invention is that the capacitor 45-2 (externally mounted) of a conventional de-emphasis circuit 45 is used as the capacitor 46-2 (externally mounted) of the HCC circuit 46. First, an RSSI signal indicating the reception level is converted to a digital signal by the A/D converter 17. Then, the control circuit 16 controls the HCC de-emphasis circuit 15 so that the time constant of the lowpass filter consisting of the resistor 18 and the capacitor 20 changes (or so that the cut-off frequency of the lowpass filter consisting of the resistor 18 and the capacitor 20 changes) by changing over the eight resistors of the HCC de-emphasis circuit 15 by the switch 19 based on the result of comparing the digital signal and the reference value. In other words, when the RSSI signal is large enough (when the reception level is high), the control circuit 16 selects the resistor 18 so that the time constant of the lowpass filter becomes smaller (so that the cut-off frequency of the lowpass filter becomes larger), and when the RSSI signal becomes smaller (as the reception level becomes lower), the control circuit 16 selects the resistor 18 so that the time constant of the lowpass filter becomes larger (so that the cut-off frequency of the lowpass filter becomes smaller). Since the capacitance of the capacitor 45-2 of the conventional de-emphasis circuit 45 and the capacitance of the capacitor 46-2 of the HCC circuit 46 are nearly the same, a single capacitor can be shared.

Thus, since the capacitor equipped in the HCC circuit which attenuates the high frequency component of a received signal and the capacitor equipped in the de-emphasis circuit canbe shared, the externally mounted capacitor 46-2 which was equipped in the HCC circuit 46 of the conventional receiver 40 can be omitted, the output terminal (pin) for connecting the IC chip and the capacitor 46-2 can be removed, and the area of the printed circuit board can reduced. Furthermore, since one externally mounted capacitor can be omitted, the cost can be reduced.

The receiver 10 in the embodiment of the present invention is so configured that the switch 19 is changed over according to the reception level, and any resistor 18 may be selected out of eight resistors. This is because the control signal for changing over the resistor 18 is a 3-bit digital signal. When the time constant should be more finely controlled, it is conceivable to increase the number of resistors and the number of bits of the control signal.

Described below are the details of the changeover operation of the switch 19 of the HCC de-emphasis circuit 15.

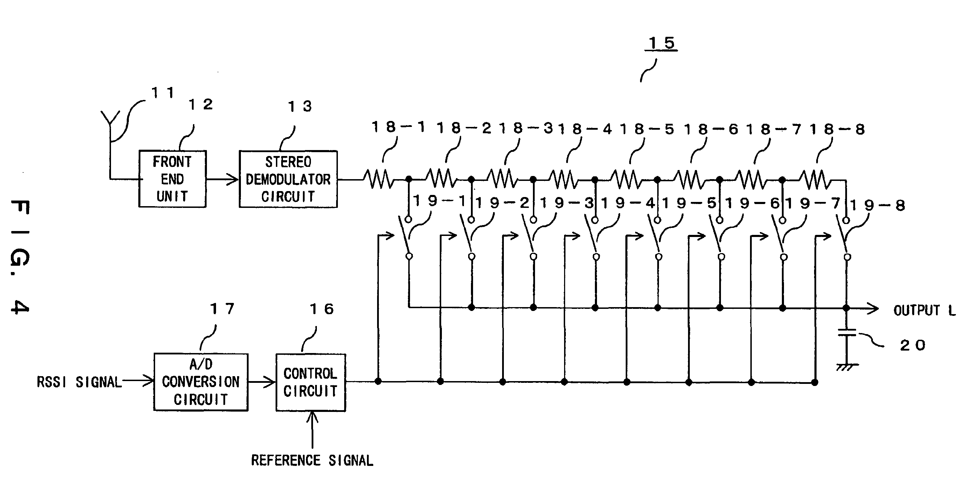

Fig. 4 is a schematic illustration showing the changeover operation of the switch 19 of the HCC de-emphasis circuit 15. To explain the changeover operation of the switch 19, since the circuit configuration for an L signal and that for an R signal are similar, the operation for changing over the time constant of the HCC de-emphasis circuit 15 in an L signal is explained in Fig. 4.

The HCC de-emphasis circuit 15 comprises eight resistors 18 (18-1, 18-2, ···, 18-8), eight switches 19 (19-1, 19-2, ···, 19-8) corresponding to the eight resistors 18, and a capacitor 20, as shown in Fig. 4. The terminals of the eight switches 19 are connected to respective centers between the eight respective resistors 18, and the other terminals of the switch 19 are connected to the capacitor 20.

First, the case in which the reception level is equivalent to or more than an upper-limit value (a predetermined value) is explained as follows. The control circuit 16 outputs such a control signal that makes the time constant of the HCC de-emphasis circuit 15 small when the reception level is equivalent to or more than an upper-limit value. In other words, if the RSSI signal which is digitized by the A/D converter circuit 17 is output to the control circuit 16, and the difference between the digital signal (RSSI signal) and the reference signal is equivalent to or more than an upper-limit value, the control signal which turns on the switch 19-1 is output from the control circuit 16. When the switch 19-1 is turned on, the received signal (the signal outputting L) is output via the resistor 18-1 and the switch 19-1. When the reception level is high enough (equivalent to or more than an upper-limit value), it is not necessary to attenuate the high frequency component so much, so the cut-off frequency of the lowpass filter of the HCC de-emphasis circuit 15 can remain large. In short, the function of the HCC circuit is not required, the function of the de-emphasis circuit along suffices.

Next, described below is the case in which the reception level is lower than an upper-limit value (a predetermined value) and higher than a lower-limit value (a predetermined value). When the reception level is lower than an upper-limit value and higher than a lower-limit value, the control circuit 16 outputs such a control signal that makes the time constant of the HCC de-emphasis circuit 15 vary according to the reception level. In other words, when the reception level is reduced, the control circuit 16 increases the time constant of the HCC de-emphasis circuit 15 (reduced the cut-off frequency), and when the reception level increases, the control circuit 16 reduces the time constant of the HCC de-emphasis circuit 15 (increases the cut-off frequency). Specifically, if the RSSI signal is digitized, and the difference between the digital signal (RSSI signal) and a reference signal is smaller than an upper-limit value and larger than a lower-limit value, the control signal which turns on the switch 19 (one of the switches 19-2, 19-3, 19-4, 19-5, 19-6 and 19-7) corresponding to the differencebetween the digital signal and the reference signal is output from the control circuit 16. For example, when the switch 19-4 turns in accordance with the reception level, a received signal is output via the resistors 18-1, 18-2, 18-3, and 18-4. By making the time constant (cut-off frequency) of the lowpass filter in the HCC de-emphasis circuit 15 variable based on the reception level, the high frequency component can be attenuated (high-cut control function: function for improving audible characteristics), and an emphasized received signal can be restored to an original received signal (de-emphasis function).

Next, described below is the case in which the reception level is equivalent to or lower than a lower-limit value (a predetermined value). When the reception level is equivalent to or lower than a lower-limit value, the control circuit 16 outputs a control signal that increases the time constant of the HCC de-emphasis circuit 15 (reduces the cut-off frequency of the HCC de-emphasis circuit 15). In other words, if the difference between the digitized RSSI signal and the reference signal is equivalent to or lower than a lower-limit value, the control circuit 16 outputs a control signal which turns on the switch 19-8. When the switch 19-8 is turned on, the received signal is output via the resistors 18-1 to 18-8 and the switch 19-1. When the reception level is low enough (equivalent to or lower than a lower-limit value), the received signal passes through all the resistors 18 (making the time constant its largest), making the cut-off frequency of the lowpass filter in the HCC de-emphasis circuit 15 its smallest, and attenuates the high frequency component.

Further described below are the details of the configuration of the HCC de-emphasis circuit 15.

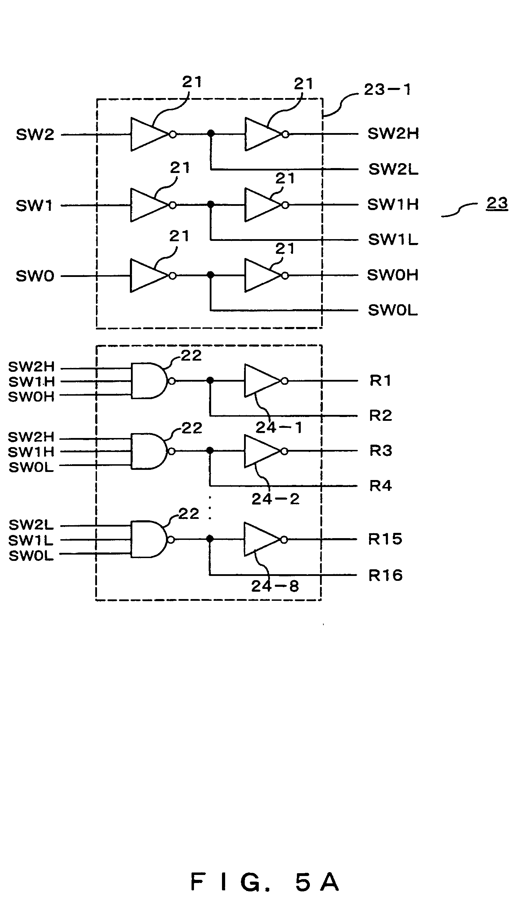

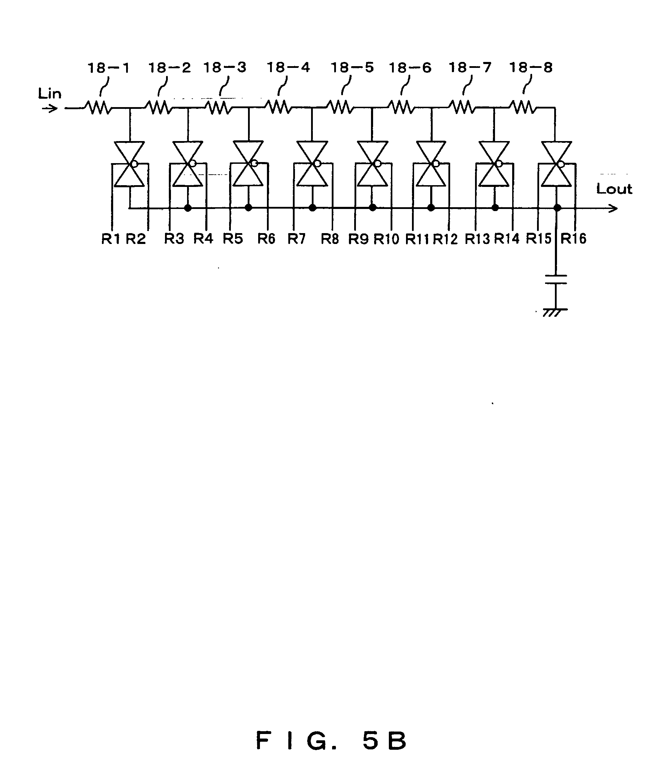

Fig. 5 shows a definite example of the HCC de-emphasis circuit 15 configured by logic circuits such as NAND gates and NOT gates. Fig. 5A shows a switch drive circuit 23 for driving the switch 19 which is configured by a NOT gate 21 and a NAND gate 22. Fig. 5B shows a specific example of the circuit configuration of the switch 19. By configuring the switch 19 and the switch drive circuit 23 as shown in Fig. 5A and Fig. 5B, all of the HCC de-emphasis circuit 15 except for the capacitor 20 (externally mounted) can be mounted on the IC chip.

For example, the case in which the switch 19-1 turns on when the difference between the reception level and the reference signal is equivalent to or more than an upper-limit value (7 or more) will be explained.

First, when the difference between the reception level and the reference signal is equivalent to or more than an upper-limit value, the control circuit 16 outputs 3 1-bit control signals, 1, 1, and 1 to SW2, SW1 and SW0 of the switch drive circuit 23-1 respectively so that the time constant of the HCC de-emphasis circuit 15 is made small. When the control signals, 1, 1 and 1 are inputted, the switch drive circuit 23-1 outputs 1 to SW2H, 0 to SW2L, 1 to SW1H, 0 to SW1L, 1 to SW0H and 0 to SW0L via the NOT gate 21.

The switch drive circuit 23-2, which is omitted from Fig. 5A, comprises eight logic circuits 24 (24-1, 24-2, ···, 24-8) consisting of the NOT gate 21 and the NAND gate 22. The output signal of the logic circuit 24 is inputted to the input terminals (R1 to R16) of the eight switches 19-1 to 19-8. When 1, 1, and 1 are inputted to SW2H, SW1H and SW0H of the logic circuit 24-1, 1 and 0 are output from R1 and R2. 0 which is inputted to R2 of the switch 19-1 is inverted into 1, and as a result, the switch 19-1 turns on. At that time, signals contrary to the switch 19-1, 0 and 1 are input to the switches 19-2 to 19-8 which turn off, but not switch 19-1 which does not turn off. (For example, 0 is inputted to R3 of the switch 19-2, and 1 is inputted to R4). When only the switch 19-1 is made to turn on, a 3-bit control signal 111 is output to the switch drive circuit 23-1 from the control circuit 16. For example, when the switch 19-2 is made to turn on, the 3-bit control signals, 1, 1, and 0 are output to SW2, SW1 and SW0 of the switch drive circuit 23-1 from the control circuit 16. When the switch 19-8 is made to turn on, the 3-bit control signals, 0, 0, and 0 are output to the switch drive circuit 23-1 from the control circuit 16.

In other words, when the difference between the reception level and the reference signal indicates 7 or more, the control circuit 16 outputs the control signals of 1, 1, and 1 to the switch drive circuit 23-1, when the difference between the reception level and the reference signal indicates 0 to 6, the control circuit 16 outputs the control signals responding to the differences to the switch drive circuit 23-1, and when the difference between the reception level and the reference signal indicates a negative value, the control circuit 16 outputs the control signals of 0, 0, and 0 to the switch drive circuit 23-1, and controls the drive of the switch 19.

When the reception level is equivalent to or more than a certain upper-limit value, the time constant of the HCC de-emphasis circuit 15 can remain small, when the reception level is equivalent to or lower than a certain lower-limit value, the time constant of the HCC de-emphasis circuit 15 is set so that it becomes its largest, and when the reception level is smaller than the upper-limit value and larger than the lower-limit value, the time constant of the HCC de-emphasis circuit 15 is set to an intermediate time constant based on the reception level. In this way, the time constant in the HCC de-emphasis circuit 15 is made variable by the resistor 18 and capacitor 20 which are selected by the switch 19 based on the reception level (the cut-off frequency is made variable), and when the reception levels lowers, the high frequency component which becomes the cause of noise is attenuated. Thus, the HCC circuit for attenuating the high frequency component according to the reception level of the received signal and the de-emphasis circuit for attenuating the received signal can be shared, so that it is possible to reduce the area of the printed circuit board configuring the receiver 10.

The present invention is not limited to the embodiments described above, but can employ various configurations or implementations within the scope not exceeding the general principles of the present invention.

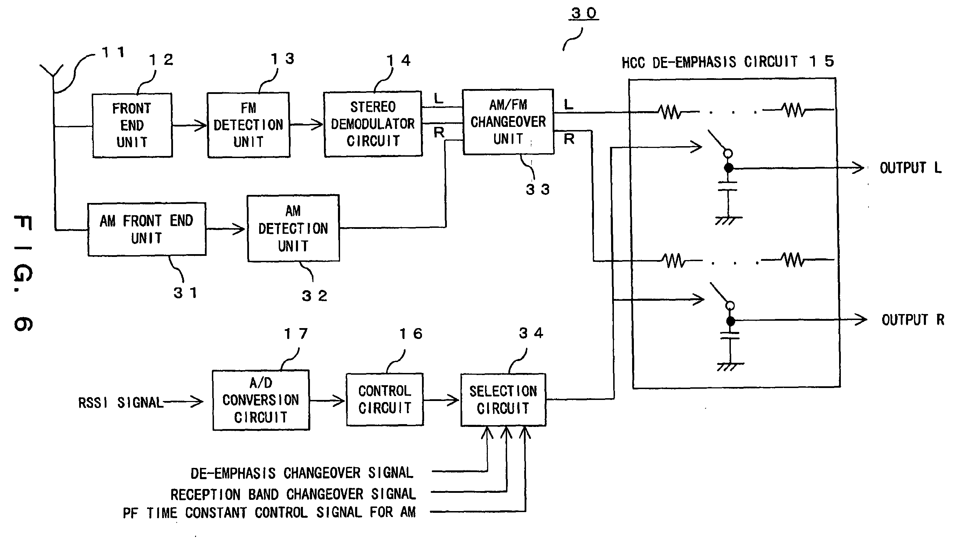

Fig. 6 shows a receiver 30 in another embodiment. The receiver 30 comprises an antenna 11, front end unit 12, FM detection unit 13, stereo demodulation unit 14, HCC de-emphasis circuit 15, control circuit 16 (a first generation unit: the unit for generating a control signal which makes the time constant of the high-cut control function in the HCC de-emphasis circuit 15 variable), A/D conversion circuit 17, AM front end unit 31 which performs various processes such as the process of tuning an AM (amplitude modulation) signal and the process converting the frequency of an AM signal from a carrier frequency band to a medium frequency, AM detection unit 32, AM/FM changeover unit 33 for changing over the signal output to the HCC de-emphasis circuit 15 to either a composite signal output from the stereo demodulation circuit 14 or an AM reception signal output from the AM detection unit 32, and selection circuit 34 (selection unit), as shown in Fig. 6. The same reference label is given to the same part as the part of the receiver 10 shown in Fig. 3 to omit the explanation of the part. The stereo demodulation unit 14 and the AM detection unit 32 may be implemented as one modulation circuit (demodulation unit).

What differs from the receiver 10 is that the selection unit 34 is attached to the control circuit 16. The signal output from the selection circuit 34 is the signal which controls the operation of the switch 19 (changeover unit). Not only the signal which controls the operation of the switch 19 according to the reception level of the FM reception signal, but also LPF time constant control signals for AM in which when an AM reception signal is received, the resistance value of the resistor 18 in the HCC de-emphasis circuit 15 becomes a fixed resistance value based on theAM signal, reception band changeover signals for changing over the control signals, and de-emphasis time constant changeover signals for changing over the time constant of the de-emphasis function according to the countries using the time constant (different frequencies depending on countries) are input to the selection circuit 34. The LPF time constant control signals for AM and the de-emphasis time constant changeover signals are generated by the generation circuit for AM (a second generationunit) and the time constant changeover circuit (a third generation unit: the unit for generating the control signal which makes the time constant of the de-emphasis function in the HCC de-emphasis circuit 15 variable) respectively. By changing the set value of the AM LPF time constant signal, for example, in the process of a production line resistance of the resistor 18 in the HCC de-emphasis circuit 15 can be change arbitrarily. The time constant of the de-emphasis function in the HCC de-emphasis circuit 15 may be made variable by inputting the de-emphasis time constant changeover signals to the control circuit 16 in the receiver 10 shown in Fig. 3.

For example, the selection circuit 34 judges which should be controlled, FM signal or AM signal, based on a reception band changeover signal, and outputs a predetermined control signal to the switch 19. In other words, if the reception band changeover signal is an instruction for controlling the FM reception signal, the selection circuit 34 selects switch 19 according to the reception level of the FM reception signal, as described above, and outputs a control signal which attenuates the high frequency component. I f the reception band changeover signal is an instruction for controlling the AM reception signal, the selection circuit 34 selects switch 19 based on the LPF time constant control signals for AM (control signals for AM), and attenuates the high frequency component of the AM reception signal based on the cut-off frequency for the AM reception signal. The selection circuit 34 controls the switch 19 so that the time constant is changed to the time constant corresponding to the appropriate country based on the de-emphasis time constant changeover signal.

In the receiver which receives FM and AM broadcast signals, when the FM broadcast signal is received, the capacitor of the HCC circuit and the capacitor of the de-emphasis circuit can be shared, and when the AM broadcast signal is received, the time constant can be changed over to the LPF time constant for the AM reception signal (the cut-off frequency required when the AM broadcast signal is received) by selecting the switch 19 of the HCC de-emphasis circuit 15. In this way, since the capacitor 20 can be shared in the HCC circuit, the de-emphasis circuit and the LPF for AM, the increase of the area of a printed circuit board avoided and the cost reduced.

In the receiver 10 or 30 of this embodiment, a microcomputer or the like may be made to set the upper-limit value or lower-limit value to be used when the setting of a reference signal to be inputted to the control circuit 16 and the operation of the switch 19 are controlled.

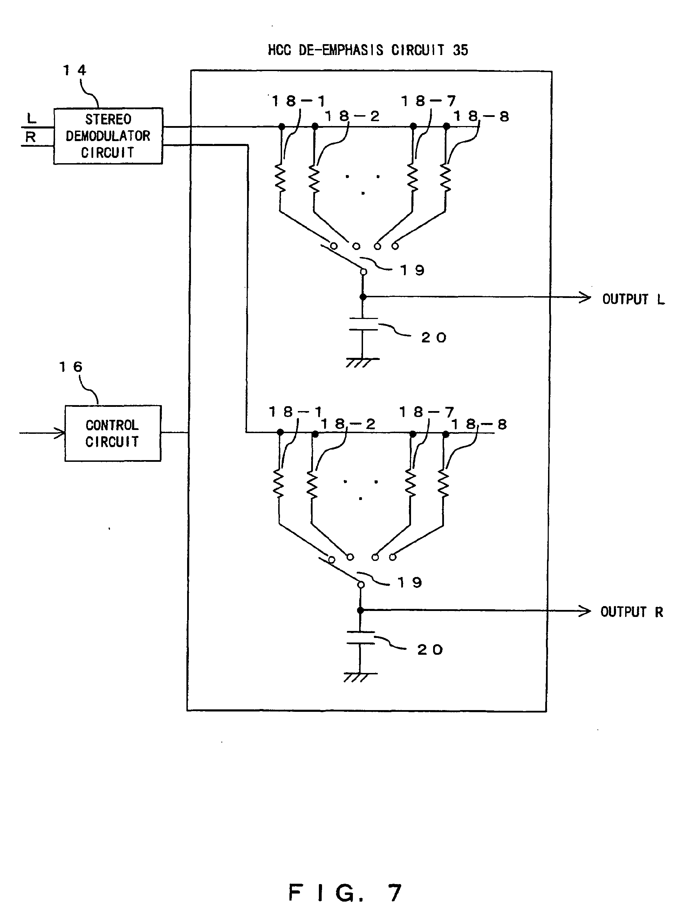

Fig. 7 shows a receiver in another embodiment. Only the characteristic part of the receiver is shown in Fig. 7.

The characteristic of the receiver shown in Fig. 7 is that the resistors 18 in the HCC de-emphasis circuit 15 shown in Fig. 3 are connected in parallel.

The resistors 18 (18-1 to 18-8) in the HCC de-emphasis circuit 35 are connected in parallel, as shown in Fig. 7, and control the operation of the switch 19 based on the reception level of the received signal in the same way as the HCC de-emphasis circuit 15. In other words, the resistors 18 change over the resistance value of the resistors so that the cut-off frequency becomes smaller as the reception level becomes smaller. For example, the resistors 18 which are connected in parallel have different resistance values respectively, and such a control signal that the resistors 18 whose resistance value becomes larger as the reception level becomes lower are selected is output to the switch 19 from the control circuit 16.

In this way, even if the resistors having different resistance values are connected in parallel, it is possible to change the cut-off frequency by changing over the resistors based on the reception level of the received signal.

In the receiver of this embodiment, the area of the printed circuit board appears to be increased by the inclusion of the resistors and the control circuit 16 beyond that of a conventional receiver by configuring the receiver so as to have the functions of the HCC circuit and de-emphasis circuit so as to make the printed circuit board smaller. However, increase in area due to the resistors and the control circuit 16 on the IC chip is very small compared with the space consumed by an externally-mounted capacitor.

According to the receiver of this embodiment, the time constant of the high frequency attenuation circuit which is connected in the stage following the demodulation circuit for demodulating the received signal and which has both a high-cut control function and a de-emphasis function is made variable based on the reception level. Thus, the parts required for the high-cut control function and the de-emphasis function, for example, the conventionally externally mounted capacitor, can be shared and internally-mounted, so that it is possible to reduce the area of the printed circuit board and the cost of the parts.

Furthermore, since the output terminals (pins) for connecting IC chips and capacitors can be removed, it is possible to further reduce the area of the printed circuit board.

In addition, since the area of the printed circuit board can be reduced, it is possible to reduce costs.

## Claims

1. A receiver which is connected in the stage following a high frequency demodulator circuit for demodulating a received signal and which has both a high-cut control function and a de-emphasis function is made variable based on the reception level.

2. A receiver, comprising:
a demodulation unit for demodulating a received signal;
an attenuation unit which is connected in the stage following the demodulation unit and which attenuates the high frequency component of a received signal;
a variable unit for making the cut-off frequency of the attenuation unit variable; and
a generation unit for generating a control signal for controlling the operation of the variable unit based on the reception level of the received signal.

3. The receiver according to claim 2, wherein
the generation unit generates a control signal for controlling the operation of the variable unit based on the reception level of the FM reception signal.

4. The receiver according to claim 2, wherein
the generation unit generates a control signal so that the cut-off frequency of the attenuation unit becomes smaller as the reception level of the received signal becomes lower.

5. A receiver, comprising:
a demodulation unit for demodulating a FM reception signal;
a resistor consisting of two or more resistors connected in the stage following the demodulation unit;
a changeover unit for changing over the resistance value of the resistors;
a capacitor which attenuates the high frequency component of the demodulated FM signal in combination with the resistors; and
a generation unit for generating a control signal for controlling the changeover operation of the changeover unit based on the reception level of the FM signal.

6. The receiver according to claim 5, wherein
the generation unit generates a control signal so that the resistance value of the resistors becomes larger as the reception level of the received signal becomes lower.

7. A receiver which receives an FM signal or an AM signal, further comprising:
a demodulation unit for demodulating the FM signal or the AM signal;
a resistor consisting of two or more resistors connected in the stage following the demodulation unit;
a changeover unit for changing over the resistance value of the resistor;
a capacitor which attenuates the high frequency component of the demodulated FM signal or AM signal in combination with the resistors;
a first generation unit for generating a control signal for controlling the changeover operation of the changeover unit based on the reception level of the FM signal;
a second generation unit for generating a control signal for AM for controlling the changeover operation of the changeover unit based on the reception level of the AM signal; and
a selection unit for selecting either the control signal or the control signal for AM based on a received signal and outputting the selected signal to the changeover unit.

8. The receiver according to claim 7, wherein
the first generation unit generates a control signal so that the resistance value of the resistor becomes larger as the reception level of the FM signal becomes lower.

9. The receiver according to claim 7, further comprising:
a third generation unit for generating a control signal for FM for controlling the changeover operation of the changeover unit in order to change the time constant of the de-emphasis function, and wherein
the selection unit selects either the control signal, the control signal for AM or the control signal for FM based on a received signal and outputs the selected signal to the changeover unit.
